# EUROPEAN PATENT APPLICATION

(11) **EP 2 421 068 A1**
(43) Date of publication of application: **22.02.2012**
(21) Application number: 11006771.7
(22) Date of filing: 18.08.2011
(51) Int. Cl.: H01M 2/10, H01M 2/34

(54) **An electric device with a label attached**

(30) Priority: 20.08.2010 JP 2010184810
(71) Applicant: Sanyo Electric Co., Ltd., Osaka 570-8677 (JP)
(72) Inventor: Haruhiko, Yoneda, Moriguchi-shi Osaka 570-8677 (JP); Masami, Haino, Moriguchi-shi Osaka 570-8677 (JP)
(74) Representative: Hertz, Oliver

(57) **Abstract**

An electric device includes a casing 31, and a label 7. The casing 31 accommodates electronic components. The label 7 is attached on the surface of the casing. A label attachment area 8 is arranged on the surface of the casing. The label 7 is attached onto the label attachment area 8. The label attachment area 8 is formed in a substantially flat surface, and has a plurality of grooves 9. The grooves 9 are uniformly distributed throughout the flat surface. The grooves intersect with each other at least at one point of each of the grooves. The adhesive strength can be kept by the flat surface arranged over substantially the whole of the label attachment area. Air can flow through the grooves uniformly distributed in the flat surface. Bulge or wrinkles of the label can be reduced which are produced by air bubbles.

## Description

### BACKGROUND OF THE INVENTION

### 1. Field of the Invention

The present invention relates to an electric device that is detachably attached to electric equipment such as electric tool and supplies electric power to the electric equipment.

### 2. Description of the Related Art

Electric equipment such as electric tool includes a battery pack which includes a rechargeable battery and is detachably attached to the main unit of the electric equipment. Such electric equipment is useful as a cordless-type tool in construction sites and the like. Since the battery pack can be detached from the main unit of the electric equipment, the detached battery pack can be attached to a battery charger so that the battery pack is charged. Thus, the battery pack can be repeatedly used.

This type of battery pack has a label 7 that is attached on the battery pack, and indicates information such as the rating and instructions of the battery pack. The label is constructed of a sticker the back surface of which paste is applied on. The label is attached by the paste on the label attachment area, which is arranged on the surface of a casing of the battery pack. In order to beautifully place the label on the label attachment area, the label attachment area is formed in a flat surface. When the label is attached the label attachment area, if air bubbles are trapped between the label and the label attachment area, problems will arise that the air bubbles obstruct reading of the words written on the label, impairs the appearance, and may cause breaks of the label. For this reason, in attachment of the label, careful attention is required to prevent air bubbles being trapped. If air bubbles are trapped, it is required to detach and attach the label from and onto the label attachment area. Thus, the attachment of the label requires man-hours. On the other hand, even if air bubbles are not trapped or even if trapped air bubbles are so small not to be noticeable, when the battery pack is stored in hot and humid surroundings, a problem may arise that the label is bulged by gas, which appears from resin of the casing. In particular, in the case where the battery cases are stored in hot and humid surroundings during transportation, this problem often arises.

In order to prevent that air bubbles affect the label, it is conceivable that the surface of the label attachment area is grained or is subjected to satin treatment. However, in this case, since a number of protruding and recessed parts are formed on the surface of the label attachment area. Accordingly, the contact surface area is reduced between the label and the label attachment area. As a result, the adhesive strength of the label will be reduced.

In order to solve such a problem, a resin-formed component has been proposed in Laid-Open Patent Publication No. JP 2007-69566 A. As shown in Fig. 13, the resin-formed component includes a peripheral smooth surface portion 91 and a central uneven surface portion 92 in a label attachment area 90. The peripheral smooth surface portion 91 is a smooth surface arranged on the peripheral part of the label attachment area 90. The central uneven surface portion 92 has very small protruding and recessed parts and is arranged in the central part of the label attachment area 90 surrounded by the peripheral smooth surface portion 91. High adhesive strength is provided between the peripheral smooth surface portion 91 and a label 97. The protruding and recessed parts of the central uneven surface portion 92 may reduce the adhesive strength of the label 91 but can serve to accommodate the gas, which appears from resin. However, even in this construction, since the adhesion surface is limited to the peripheral part of the label 97, the central part of the label 97 will easily bulge. As a result, there is a problem that air bubbles are likely to gather in the central part of the label 97.

Alternatively, it is conceivable that paste is applied in a grid shape on the back surface of a label so that the label can be out of contact with a label attachment area whereby removing air bubbles.

However, in this case, the grid shape of the paste will be noticeable on the front side of the label. As a result, there is a problem that the appearance of the label is impaired.

### SUMMARY OF THE INVENTION

The present invention is devised to solve the above problems. It is a main object to provide an electric device that can significantly reduce air bubbles trapped between a label and the electric device in attachment of the label.

To achieve the above object, an electric device according to a first aspect of the present invention includes a casing 31, and a label 7. The casing 31 accommodates electronic components. The label 7 is attached on the surface of the casing. A label attachment area 8 is arranged on the surface of the casing. The label 7 is attached onto the label attachment area 8. The label attachment area 8 is formed in a substantially flat surface, and has a plurality of grooves 9. The grooves 9 are uniformly distributed throughout the flat surface. Each of the grooves intersects with at least other one of the grooves. According to this construction, a sufficient adhesive strength can be kept by the flat surface, which is arranged over substantially the whole of the label attachment area. In addition, air can flow through the grooves, which are uniformly distributed in the flat surface. Therefore, it is possible to reduce bulge or wrinkles of the label produced by air bubbles.

In an electric device according to a second aspect of the present invention, the plurality of grooves 9 can be formed in a grid shape in the flat surface. According to this construction, the grooves can be easily uniformly distributed in the flat surface. Therefore, a sufficient adhesive strength can be kept throughout the flat surface, while it is possible to prevent that air bubbles are trapped between the casing and label.

In an electric device according to a third aspect of the present invention, the plurality of the grooves 9 can be at least partially exposed outside the label 7 after the label 7 is attached onto the label attachment area 8. According to this construction, the grooves are not entirely covered by the label, but the grooves partially extend outward of the label so that the label does not overlap parts of the grooves. As a result, air bubbles can be discharged through the exposed parts. Therefore, it is possible to effectively prevent that wrinkles and the like are produced.

In an electric device according to a fourth aspect of the present invention, the casing can include upper and lower cases. The casing is constructed by connecting the upper and lower cases to each other by a fastening member 10. A connection hole 11 can be opened in the casing. The fastening member 10 is inserted into the connection hole 11, and connects the upper and lower cases to each other. The connection hole 11 can receive a closing member 12 that closes the connection hole 11. The closing member 12 includes a substantially cylindrical member 16, a plurality of first press-fit portions 13, and a second press-fit portion 14. The plurality of first press-fit portions 13 protrude from the side surface of the cylindrical member 16, and extend in the direction in parallel to the center axis of the cylindrical member 16. The second press-fit portion 14 protrudes from the side surface of the cylindrical member 16, and is arranged along the circumferential direction of the cylindrical member 16. The second press-fit portion 14 intersects with the first press-fit portions 13. The first press-fit portions 13 and the second press-fit portion 14 are designed to come in contact with the inner surface of the connection hole 11 when the closing member 12 is inserted into the connection hole 11. According to this construction, the elongated first press-fit portions and the circular second press-fit portion come in press-contact with the inner surface of the connection hole. As a result, it is possible to prevent that the closing member is inclined in the connection hole. Once the closing member is inserted into the connection hole, users cannot easily remove the closing member. Therefore, this construction can dissuade users from modifying the electric device.

In an electric device according to a fifth aspect of the present invention, the first press-fit portions 13 can be continuously formed extending from the side surface of the second press-fit portion 14. According to this construction, the first press-fit portions and the second press-fit portion can have the same height at least in a part of the closing member. Accordingly, the closing member can press the inner surface of the connection hole in the direction intersecting with the inner surface of the connection hole. As a result, the friction can be increased between the closing member and the inner surface of the connection hole. Therefore, it is possible to suppress deviation or inclination of the closing member in the inner surface of the connection hole.

In an electric device according to a sixth aspect of the present invention, the cylindrical member 16 can be tapered down toward the insertion end to be inserted into the connection hole 11.

In an electric device according to a seventh aspect of the present invention, the central part of the cylindrical member 16 can be hollow which is located inside the first press-fit portions 13. According to this construction, it is possible to suppress the sink mark in the case where the closing member is formed by molding. In addition, the closing member can be easily press-fitted into the connection hole.

In an electric device according to an eighth aspect of the present invention, the electric device can be a battery pack.

In an electric device according to a ninth aspect of the present invention, the electric device can be a charger.
The above and further objects of the present invention as well as the features thereof will become more apparent from the following detailed description to be made in conjunction with the accompanying drawings.

### BRIEF DESCRIPTION OF THE DRAWINGS

Fig. 1 is a perspective view showing a battery pack;
Fig. 2 is a perspective view showing the battery pack shown in Fig. 1 as viewed from the rear side;
Fig. 3 is a front view of the battery pack shown in Fig. 1;
Fig. 4 is a plan view of the battery pack shown in Fig. 1;
Fig. 5 is a perspective view showing the battery pack shown in Fig. 1 as viewed from the bottom side;
Fig. 6 is an exploded perspective view of the battery pack shown in Fig. 5 showing a label attachment area;
Fig. 7 is an exploded perspective view showing the battery pack shown in Fig. 1;
Fig. 8 is a perspective exploded view showing the battery pack shown in Fig. 7 as viewed from the rear side;
Fig. 9 shows a cross-sectional perspective view and an enlarged cross-sectional view of the label attachment area along the line IX-IX in Fig. 6;
Fig. 10 shows a cross-sectional perspective view and an enlarged cross-sectional view of the label attachment area along the line X-X in Fig. 5;
Fig. 11 is a perspective view showing a closing member shown in Fig. 7;
Fig. 12 is a cross-sectional view showing the closing member shown in Fig. 11 with being inserted into a connection hole; and
Fig. 13 is a schematic view showing a conventional label attachment structure.

### DETAILED DESCRIPTION OF THE EMBODIMENT(S)

The following description will describe embodiments according to the present invention with reference to the drawings. It should be appreciated, however, that the embodiments described below are illustrations of an electric device used therein to give a concrete form to technical ideas of the invention, and an electric device of the invention is not specifically limited to description below. Furthermore, it should be appreciated that the members shown in claims attached hereto are not specifically limited to members in the embodiments. Unless otherwise specified, any dimensions, materials, shapes and relative arrangements of the members described in the embodiments are given as an example and not as a limitation. Additionally, the sizes and the positional relationships of the members in each of drawings are occasionally shown larger exaggeratingly for ease of explanation. Members same as or similar to those of this invention are attached with the same designation and the same reference numerals, and their description is omitted. In addition, a plurality of structural elements of the present invention may be configured as a single part that serves the purpose of a plurality of elements, on the other hand, a single structural element may be configured as a plurality of parts that serve the purpose of a single element. Also, the description of some of examples or embodiments may be applied to other examples, embodiments or the like.

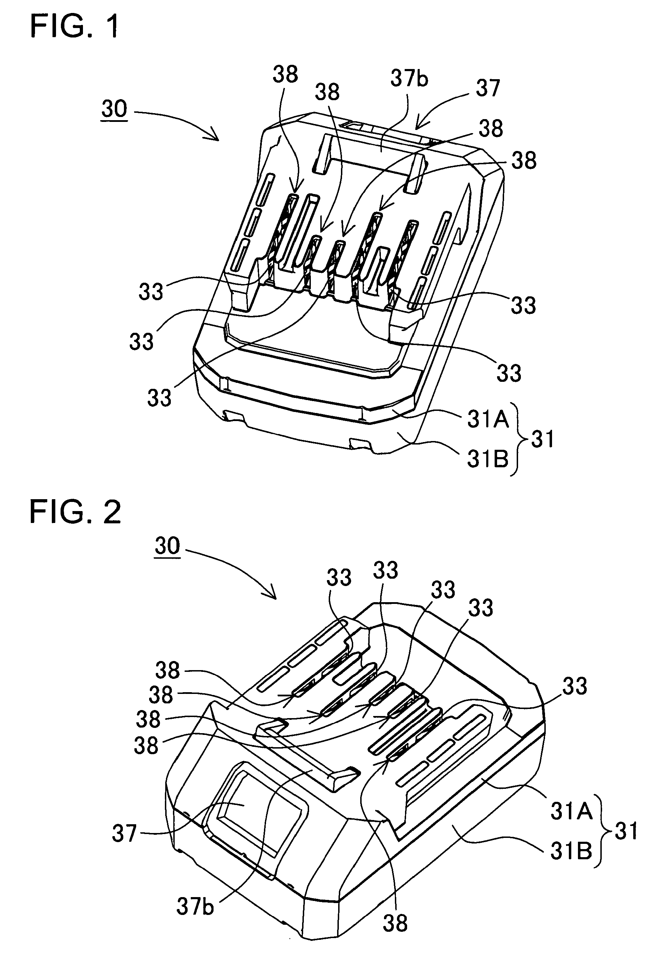

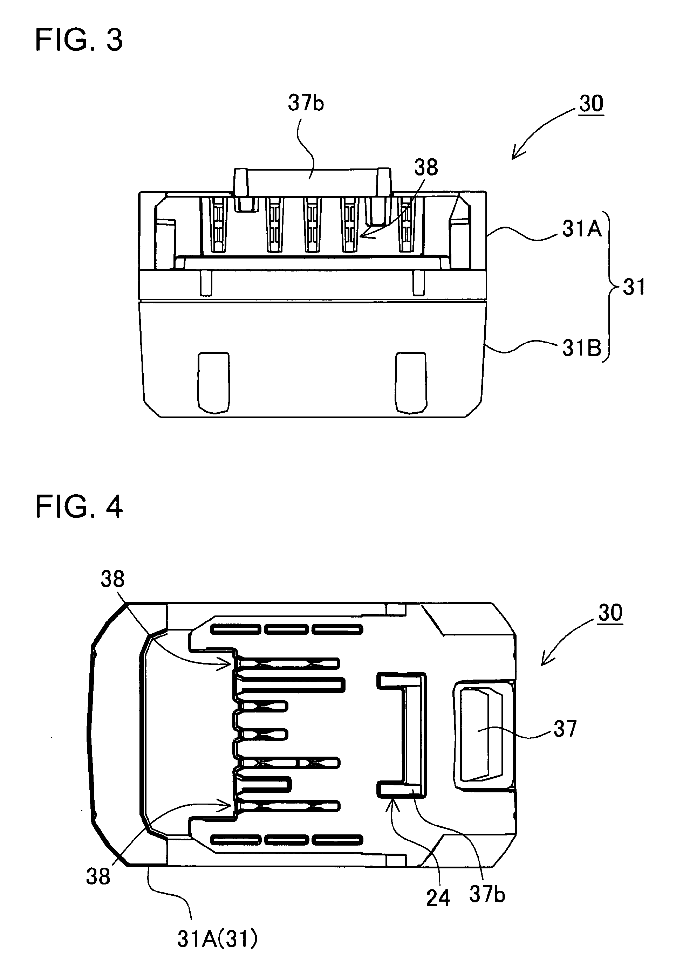

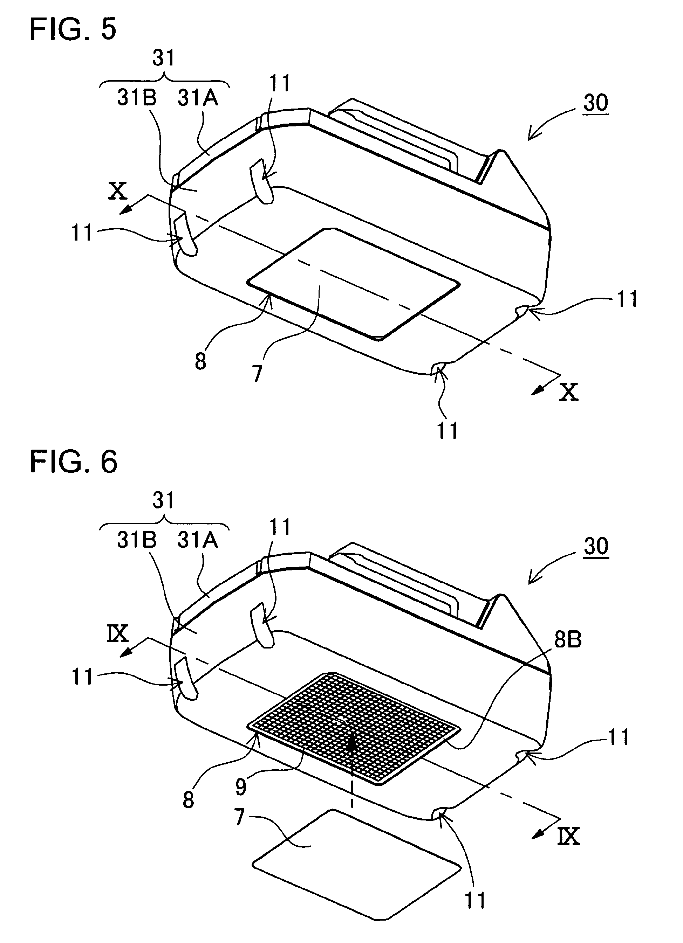

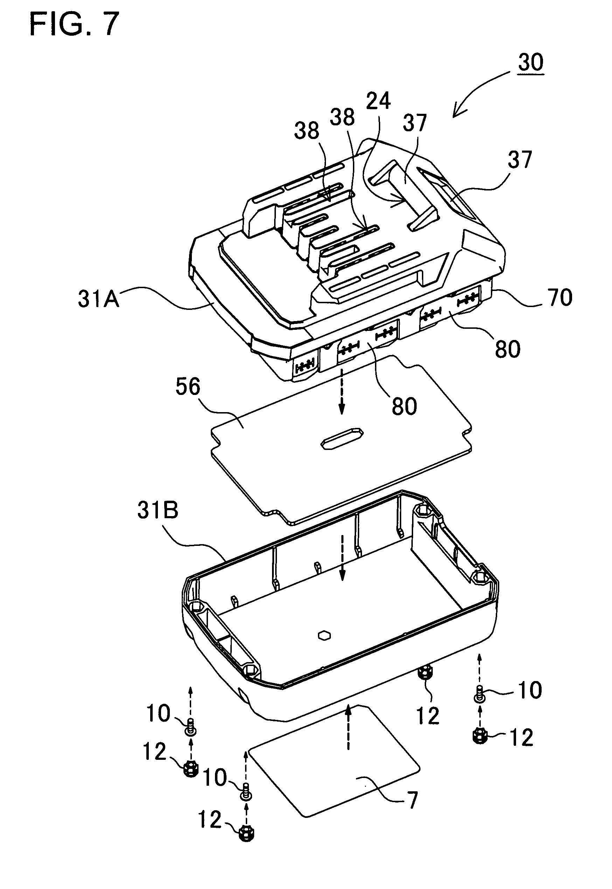

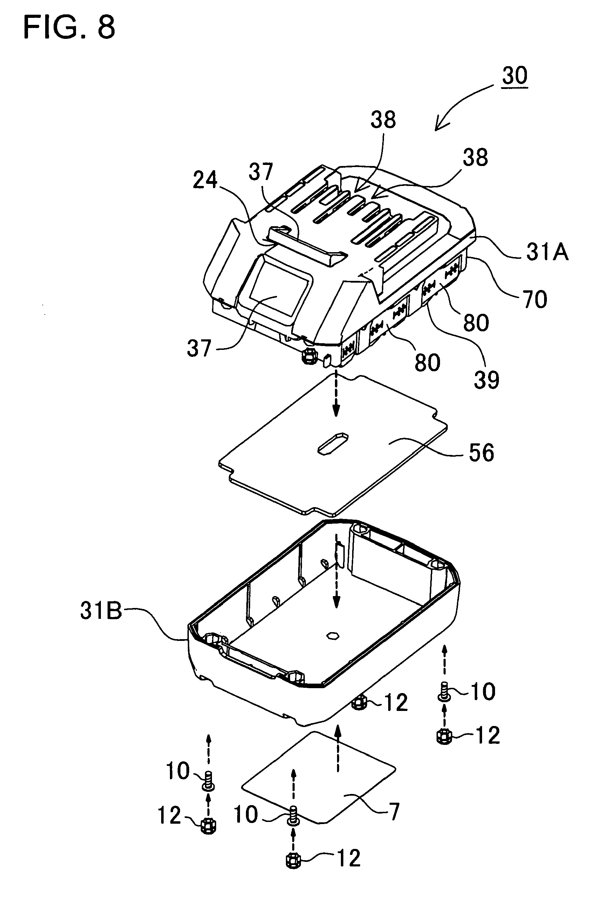

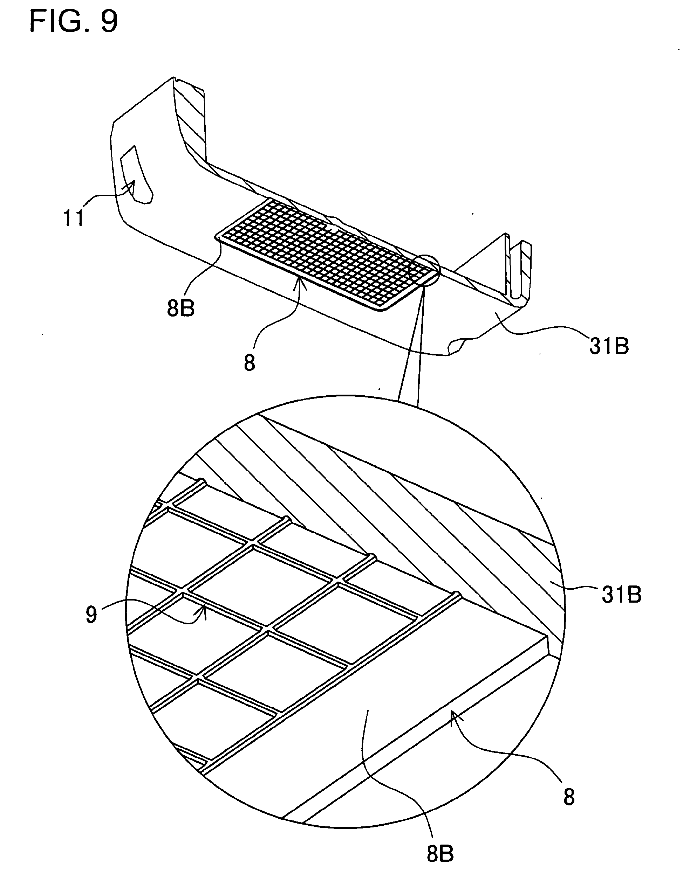

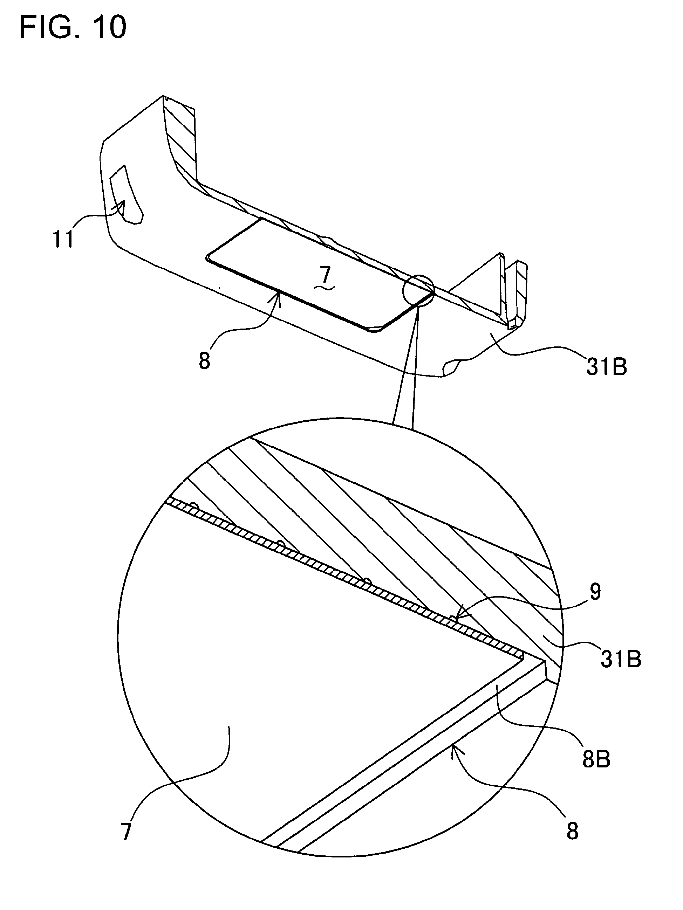

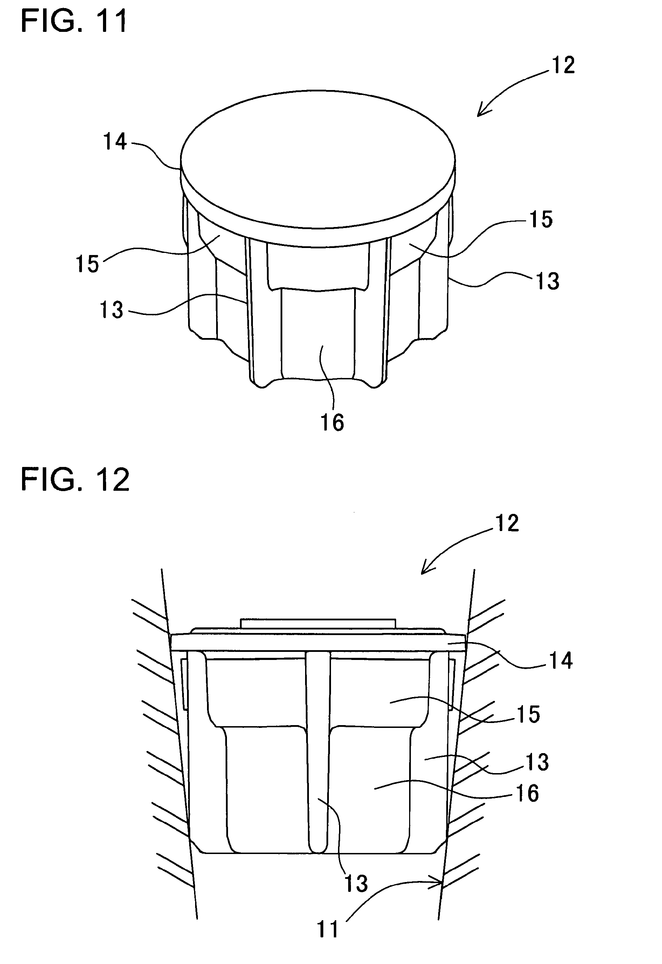

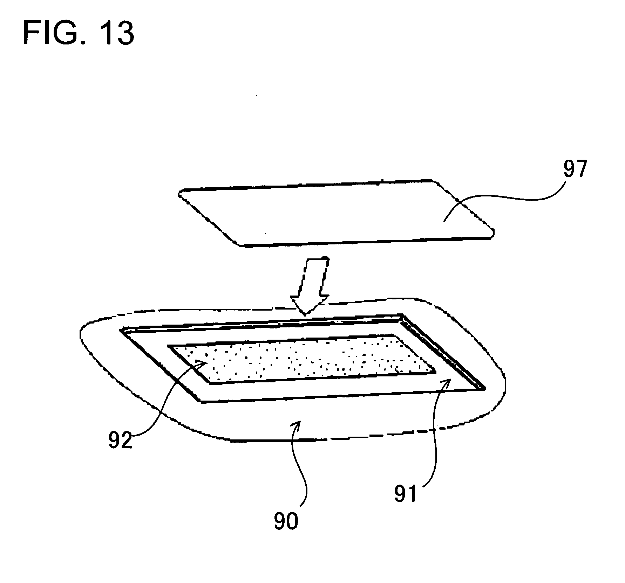

Figs. 1 to 23 show a battery pack as an electric device according to an embodiment of the present invention. Fig. 1 is a perspective view showing a battery pack 30. Fig. 2 is a perspective view showing the battery pack 30 shown in Fig. 1 as viewed from the rear side. Fig. 3 is a front view of the battery pack 30 shown in Fig. 1. Fig. 4 is a plan view of the battery pack 30 shown in Fig. 1. Fig. 5 is a perspective view showing the battery pack 30 shown in Fig. 1 as viewed from the bottom side. Fig. 6 is an exploded perspective view of the battery pack 30 shown in Fig. 5 showing a label attachment area 8. Fig. 7 is an exploded perspective view showing the battery pack 30 shown in Fig. 1. Fig. 8 is a perspective exploded view showing the battery pack 30 shown in Fig. 7 as viewed from the rear side. Fig. 9 shows a cross-sectional perspective view and an enlarged cross-sectional view of the label attachment area 8 along the line IX-IX in Fig. 6. Fig. 10 shows a cross-sectional perspective view and an enlarged cross-sectional view of the label attachment area along the line X-X in Fig. 5. Fig. 11 is a perspective view showing a closing member 12 shown in Fig. 7. Fig. 12 is a cross-sectional view showing the closing member 12 shown in Fig. 11 with being inserted into a connection hole 11. The battery pack 30 according to this example will be illustratively described to be applied to an electric tool as electric equipment to which the battery pack 30 is mounted.

The illustrated battery pack 30 includes a plurality of rechargeable batteries 39, the battery holder 70, battery lead plates 80, a casing 31, external connection terminals 33, and a lock hook 37b. The battery holder 70 holds the plurality of rechargeable batteries 39. The battery lead plates 80 connect the end surfaces of the rechargeable batteries 39 to each other. The casing 31 accommodates the battery holder 70. The external connection terminals 33 are connected to the rechargeable batteries 39, and are exposed externally of the casing 31. The lock hook 37b protrudes from the surface of the casing 31, and holds the battery pack with the battery pack being attached to a battery pack charger.

### (Casing 31)

The casing 31 has a box-shaped outward appearance as shown in Figs. 1 to 4. The corner parts of the casing 31 are rounded. Also, the casing 31 has slots 38 in the surface of the casing 31. The external connection terminals 33 are exposed from the slots 38. The external connection terminals 33 can be connected to the electric tool as electric equipment, or connection terminals 3 of the battery pack charger. Also, the casing includes an attachment protruding portion 37 that holds the battery pack 30 with the battery pack 30 being mounted to the electric tool or the battery pack charger after the battery pack 30 is mounted to the electric tool or the battery pack charger. The casing 31 is formed of resin or the like having excellent insulation and reinforcement.

### (Label 7)

As shown in Figs. 5 to 8, a label 7 is attached onto the back surface of the casing 31. The front side of the label 7 shows information including rating of the battery pack, cautions and the like. An adhesive such as paste is applied for attachment of the label 7 onto the back side of the label 7. On the other hand, the label attachment area 8 is formed on the surface of the casing 31. The label 7 is attached onto the label attachment area 8. In the case of Fig. 6, the label attachment area 8 is located on the bottom of a lower case 31 B.

### (Label Attachment Area 8)

The label attachment area 8 has a quadrangular (rectangular) shape as viewed in plan view. The whole surface of the label attachment area 8 is substantially flat. A plurality of grooves 9 are formed in this flat surface. The grooves 9 are formed in a recessed slit shape in the flat surface. Each of the grooves 9 intersects with at least other one of the grooves 9. It is preferable that the grooves 9 be substantially uniformly distributed in the whole flat surface. In the case of Fig. 6, the grooves 9 extend the longitudinal and transverse directions and are spaced at a constant interval away from each other. Thus, the entire pattern of the grooves 9 is designed in a grid shape. In the case where a number of grooves 9 are formed in a narrow slot shape in the label attachment area 8, even if air bubbles and the like are trapped between the label 7 and the label attachment area 8 in attachment of the label 7, air can flow into and be accommodated in the grooves 9. As a result, it is possible to reduce bulge or wrinkles of the label 7. Also, as shown in the cross-sectional view of Fig. 9, since the grooves 9 are formed in a narrow slot shape, most parts of the label attachment area 8 can be a flat surface. Accordingly, the label 7 can have a large contact area with label attachment area 8. As a result, a sufficient adhesive strength can be kept. In this embodiment, the label can be uniformly adhered on substantially the whole surface of the label attachment area dissimilar to the case of Laid-Open Patent Publication No. JP 2007-69566 A in which the peripheral part of the label is adhered on the label attachment area. Accordingly, in this embodiment, the reliability of adhesion can be improved. In addition, the label can be beautifully attached.

In this specification, the flat surface refers to a surface which does not have protruding and recessed parts such as grooves, and does not require a surface which is finely smoothed such as a mirror-finished surface such as in the case of molding die. Even if the flat surface has such a degree of roughness that surface finish is not put on the flat surface, this flat surface can serve the function in the invention as long as having practically sufficient flatness to adhere the label on the flat surface. Thus, the flat surface in this specification includes a surface which has such a degree of roughness that problems do not arise in practical use.

On the other hand, even if air bubbles are trapped between the label 7 and the label attachment area 8 in the attachment of the label as discussed above, since the grooves 9 are spaced at a constant interval away from each other, the air bubbles can move to and be discharged through the grooves 9. In particular, in the case where the grooves 9 are formed in a grid shape and intersect with each other so that the grooves 9 extend in the longitudinal and transverse directions, air bubbles can be easily accommodated through the grooves 9. As a result, there is an advantage that bulge and wrinkles of the label 7 caused by air bubbles can be reduced so that the label 7 can be beautifully attached. In addition, there is an advantage that the label attachment work can be easy. Air bubbles are not produced not only in attachment of the label but also are likely to be produced in high temperature surroundings. The reason is that air expands under the label 7. In this embodiment, as shown in Figs. 6, 9 and 10, a peripheral smooth surface part 8B is arranged on a peripheral part of the label attachment area 8. In this case, the peripheral part of the label 7 is adhered on the periphery smooth surface area 8B. Accordingly, air and air bubbles will be confined. However, the air and air bubbles can flow into the grooves 9, which extend in the longitudinal and transverse directions. As a result, it is possible to suppress bulge and wrinkles of the label 7 caused by air and air bubbles under the label 7.

Also, a sink mark of the lower case can serve as space for collecting air bubbles. The sink mark will be formed in the lower case formed by resin molding when resin is cured. For example, a recessed portion of sink mark can be formed in substantially the center of the label attachment area. In this case, the grooves are formed communicating with the recessed portion. Thus, air bubbles can move to this recessed portion. As a result, the air bubbles can be unnoticeable.

Alternatively, the grooves can be partially arranged outside the label. In this case, air bubbles can be discharged through this outward extending part from the space between the label attachment area and the label. In other words, although the space is typically closed between the label attachment area and the label, in the case where even a part of the groove is not covered by the label, the closed space communicates with the outside so that air bubbles can be discharged. For example, the grooves can extend outward of the label attachment area. Alternatively, the label can be formed smaller than the label attachment area. In this construction, even after the label is attached onto the label attachment area, the grooves are not entirely covered by the label. Thus, a part of groove can be arranged outside the label. In other words, the groove can be partially externally exposed. As a result, since the grooves intersect with each other so that all of the grooves communicate with each other, all of the grooves can communicate with the outside of the label through the exposed part of the groove. Therefore, air bubbles can be discharged outward through this exposed part of the groove. According to this construction, since the label can be attached without much concern for trapping of air bubbles, the label attachment work can be easier.

The casing 31 includes divided portions of the upper and lower cases 31A and 31 B as shown in the exploded perspective views of Figs. 7 and 8. Accommodation space is formed inside the casing 31. The battery holder 70 and the attachment protruding portion 37 are accommodated in this space.

### (Sheet Member 56)

The aforementioned battery holder 70 is accommodated in the casing 31, as shown in the exploded perspective view of Fig. 7. A sheet member 56 is preferably interposed between the battery holder 70 and the lower case 31 B. The sheet member 56 is formed of a material that is excellent in electrical insulation and thermal insulation (e.g., silicon or the like). In the case the sheet member 56 serves as a cushion, it is possible to provide an effect that external shock can be absorbed or reduced. Also, it is possible to reduce the clearance between the battery holder and the bottom of the casing.

### (Fastening Member 10)

The upper and lower cases are coupled by the fastening member 10. The fastening member 10 can be a screw, fitting structure, or the like. In this embodiment, screw for threaded engagement is used as the fastening member 10. In order to prevent that undesirable modifications cause accidents and the like, the battery pack preferably has an internal structure which cannot be easily disassembled. Alternatively, the battery pack can be constructed for disassembly recognition. In this case, the possibility of modifications can be grasped. To achieve this, the closing member 12 closes the connection hole 11 which receives the fastening member 10. Accordingly, the fastening member 10 can be invisible, which in turn can dissuade users from disassembling the battery pack. In addition, the closing member 12 is press-fitted into the connection hole 11. The closing member 12 is constructed to be damaged if users try to forcedly remove the closing member 12 from the connection hole 11 after the closing member 12 is press-fitted into the connection hole 11. According to this construction, disassembly can be grasped.

From this viewpoint, the inventors have diligently studied the construction of the closing member which makes removal of the closing member difficult. As a result, the inventers have ascertained the operation when the closing member is removed after the closing member is press-fitted into the connection hole. That is, users will incline the closing member inside the connection hole, and create a clearance between the closing member and the connection hole. After that, users will insert a flat member such as flatblade screwdriver into the clearance, and pull the closing member out of the connection hole using leverage. For this reason, the inventers have found that, if the closing member to be press-fitted is not easily inclined inside the connection hole, such operation can be prevented. Therefore, the inventors have developed the closing member having such a structure.

### (Closing Member 12)

The closing member 12 is now described with reference to Figs. 11 and 12. In this embodiment, the fastening member 10 threadedly engages with the connection hole 11. Again, the closing member 12 is inserted into the connection hole 11. The closing member 12 serves as a cap which covers the screw head of the screw, which threadedly engages with the connection hole 11. The closing member 12 includes a substantially cylindrical member 16, and a plurality of first press-fit portions 13, and a second press-fit portion 14. The plurality of first press-fit portions 13 protrude from the side surface of the cylindrical member 16. The second press-fit portion 14 forms the end surface of the cylindrical member 16.

The connection hole 11 is formed in a cylindrical shape. Again, the closing member 12 is press-fitted into the connection hole 11. Correspondingly, the closing member 12 is also formed in a substantially cylindrical shape. In order that the closing member 12 may not be detached from the connection hole 11 after being press-fitted into the connection hole 11, the connection hole 11 is tapered so that the cross-sectional area of the connection hole 11 gets smaller toward the bottom side. The second press-fit portion 14 has a disc shape, and serves as a lid which is exposed from the connection hole 11 after the closing member 12 is press-fitted into the connection hole 11. The outer diameter of the disc-shaped second press-fit portion 14 is dimensioned substantially equal to the interior diameter of the connection hole 11 at the press-fit position where the closing member 12 is brought in press-fitted contact with the connection hole 11.

The second press-fit portion 14 is arranged along the circumferential direction and is formed in a flange shape protruding from the circumference of the upper part of the cylindrical member. On the other hand, the first press-fit portions 13 extend in the direction in parallel to the center axis of the cylindrical member 16. Accordingly, the second press-fit portion 14 intersects with the first press-fit portions 13. In order that the closing member may be inserted into the connection hole 11 with tapered inner surface, as shown in Fig. 12, the protrusion height of the first press-fit portions 13 is dimensioned lower than the second press-fit portion 14. Also, the cylindrical member 11 can be tapered down toward the insertion end to be inserted into the connection hole 11. The closing member 12 is integrally formed of a flexible material such as resin by molding.

Each of the first press-fit portions 13 is formed in a linear ridge shape. The first press-fit portions 13 are spaced at a substantially constant interval away from each other along the side surface of the cylindrical member, and protrude from the side surface of the cylindrical member. In addition, the first press-fit portions 13 come in contact with the inner surface of the connection hole 11. Accordingly, when the closing member 12 is press-fitted into the connection hole 11, the upper part of the closing member 12 contacts the connection hole 11 with the contact part being formed in a circular shape which extends along the circumference of the second press-fit portion 14, while the lower part of the closing member 12 contacts the connection hole 11 at a plurality of locations corresponding to the first press-fit portions 13, which protrude in the lower part of the closing member 12, as shown in Fig. 12. Thus, the closing member 12 is securely held by the upper and lower parts of the closing member 12, which are arranged along the circumferential direction. Accordingly, the closing member 12 is firmly fixed in the connection hole 11. As a result, it is hard to incline the closing member 12 inside the connection hole 11. As a result, it is difficult for users to incline the closing member 12 inside the connection hole 11 and to remove the closing member 12 from the connection hole 11. Even if users try to forcedly remove the closing member 12, the closing member 12 will be damaged. Thus, a damaged part will be formed on the closing member 12. For this reason, the damaged part will inform that a user disassembles the casing. Therefore, it is possible to easily find modifications of the battery pack.

Also, in order that the first press-fit portions 13 can surely protrude from the cylindrical member 16, in the case of Fig. 11, a reinforcement portion 15 is formed on the side surface of the cylindrical member 16. The reinforcement portion 15 is arranged along the circumferential direction of the cylindrical member 16 so that the second press-fit portion 14 side of the closing member is thicker. This reinforcement portion 15 allows each of the first press-fit portions 13 to more surely protrude from the circumference of the cylindrical member 16 and to be more firmly fixed in the connection hole. On the other hand, the lower part of the cylindrical member 16 is formed hollow so that the lower end of the cylindrical member 16 is opened. As a result, it is possible to prevent that a sink mark is formed on the closing member 12 formed of resin. In addition, the hollow part facilitates plastic deformation of the first press-fit portions 13. Therefore, it is possible to the friction of the closing member 12 when the closing member 12 is press-fitted into the connection hole.

In particular, as discussed above, since the second press-fit portion 14 is formed in a protruding circular shape, the contact part can be formed in a continuous circular line between the outer surface of the closing member 12 and the inner surface of the connection hole 11. Thus, the opening of the connection hole 11 can be closed by the second press-fit portion without gap on the continuous circular line. As a result, the closing effect can be improved. Therefore, it can be difficult for users to forcedly open the connection hole 11. On the other hand, since the first press-fit portions 13 extend in the direction which intersects with the second press-fit portion (i.e., in the depth direction of the connection hole 11), the friction can be reduced when the closing member 12 is inserted into the connection hole 11. Also, in addition to this, since the cylindrical member 16 is formed hollow, the closing member 12 can be smoothly inserted into the connection hole 11. Therefore, the press-fit work can be easy.

In addition, the upper ends of the first press-fit portions 13 can be coplanar with the side surface of the second press-fit portion 14, while the first press-fit portions 13 can be continuously tapered down toward the lower end. In this case, the contact area between the closing member 12 and the connection hole inner surface can be increased by line contact of the first press-fit portions with the connection hole inner surface relative to point contact. As a result, the closing member can more tightly contact the connection hole inner surface. Therefore, it is possible to more surely prevent that foreign matter enters the connection hole and that users forcedly remove the closing member.

### (Hook Opening Window 24)

As shown in Fig. 4 or the like, the hook opening window 24 is opened in the upper case 31A. The lock hook 37b is exposed from the hook opening window 24. The lock hook 37b composes a lock structure, which holds the battery pack 30 for preventing from detachment of the battery pack 30 after the battery pack 30 is mounted to the battery pack charger. Also, the lock hook 37b can compose a lock structure, which holds the battery pack 30 for preventing from detachment of the battery pack 30 after the battery pack 30 is mounted to the electric equipment.

### Industrial Applicability

An electric device according to the present invention can be suitably used as electric tool battery pack, and battery packs for mobile devices such as power-assisted bicycle, electric motorcycle, mobile phone, charger, and other devices having a casing onto which a label is attached.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

## Claims

1. An electric device comprising:
a casing (31) that accommodates electronic components; and
a label (7) that is attached onto the surface of said casing,
wherein a label attachment area (8) is arranged on the surface of said casing, said label (7) being attached onto the label attachment area (8),
**characterized in that**:
said label attachment area (8) is formed in a substantially flat surface, and has a plurality of grooves (9) that are uniformly distributed throughout the flat surface, wherein each of the grooves (9) intersects with at least other one of the grooves (9).

2. The electric device according to claim 1, wherein said plurality of grooves (9) are formed in a grid shape in said flat surface.

3. The electric device according to claim 1 or 2, wherein said plurality of said grooves (9) are at least partially exposed outside said label (7) after said label (7) is attached onto the label attachment area (8).

4. The electric device according to any of claims 1 to 3,
wherein said casing includes divided parts of upper and lower cases, wherein said casing is constructed by connecting said upper and lower cases to each other by a fastening member (10),
wherein a connection hole (11) is opened in said casing, the fastening member (10) being inserted into the connection hole (11) and connecting said upper and lower cases to each other,
wherein said connection hole (11) can receive a closing member (12) that closes said connection hole (11),
wherein said closing member (12) includes
a substantially cylindrical member (16),
a plurality of first press-fit portions (13) that protrude from the side surface of said cylindrical member (16), and extend in the direction in parallel to the center axis of the cylindrical member (16), and
a second press-fit portion (14) that protrudes from the side surface of said cylindrical member (16), and is arranged along the circumferential direction of the cylindrical member (16), the second press-fit portion (14) intersecting with said first press-fit portions (13),
wherein said first press-fit portions (13) and said second press-fit portion (14) are designed to come in contact with the inner surface of the connection hole (11) when said closing member (12) is inserted into said connection hole (11).

5. The electric device according to claim 4, wherein said first press-fit portions (13) is continuously formed extending from the side surface of said second press-fit portion (14).

6. The electric device according to claim 4 or 5, wherein said cylindrical member (16) is tapered down toward the insertion end to be inserted into said connection hole (11).

7. The electric device according to any of claims 4 to 6, wherein the central part of said cylindrical member (16) is hollow which is located inside said first press-fit portions (13).

8. The electric device according to any of claims 1 to 7, wherein said electric device is a battery pack.

9. The electric device according to any of claims 1 to 7, wherein said electric device is a charger.
